# EUROPÄISCHE PATENTSCHRIFT

(11) **EP 2 548 711 B1**
(45) Veröffentlichungstag und Bekanntmachung des Hinweises auf die Patenterteilung: **05.07.2017**
(21) Anmeldenummer: 11174785.3
(22) Anmeldetag: 21.07.2011
(51) Int. Cl.: B29C 47/68, B01D 29/54, B01D 29/15, B01D 29/23

(54) **Filtereinheit für eine Extruder-Anlage sowie Filteranordnung und zugehörige Siebwechselvorrichtung für eine Extruder-Anlage mit einer derartigen Filtereinheit**
Filter unit for an extruder assembly ; a filter assembly and corresponding filter changing device for an extruder assembly with such a filter unit
Unité de filtrage pour un assemblage extrudeuse; un assemblage de filtrage et dispositif de filtrage correspondante pour changer un assemblage extrudeuse avec une telle unité de filtre

(43) Veröffentlichungstag der Anmeldung: 23.01.2013
(73) Patentinhaber: Coperion GmbH, 70469 Stuttgart (DE)
(72) Erfinder: Sämann, Hans-Joachim, 74321 Bietigheim-Bissingen (DE)
(74) Vertreter: Rau, Schneck & Hübner Patentanwälte Rechtsanwälte PartGmbB

(56) Entgegenhaltungen:
- WO-A2-01/47687
- DE-A1-102007 005 204
- GB-A- 1 386 143
- US-A- 4 849 103

## Beschreibung

Die Erfindung betrifft eine Filtereinheit für eine Extruder-Anlage gemäß dem Oberbegriff des Anspruchs 1. Ferner betrifft die Erfindung eine Filteranordnung sowie eine Siebwechselvorrichtung für eine Extruder-Anlage mit einer derartigen Filtereinheit.

In der WO 01/47687 A2 ist eine Filtereinheit für einen Extruder offenbart, die einen äußeren Stützkörper mit einem daran angeordneten äußeren Filterelement aufweist. Der äußere Stützkörper begrenzt einen Innenraum, in dem ein innerer Stützkörper mit einem daran angeordneten inneren Filterelement angeordnet ist. Nachteilig ist, dass die bekannte Filtereinheit einen vergleichsweisen hohen Strömungswiderstand für die Kunststoffschmelze aufweist.

Aus der DE 10 2007 005 204 A1 ist eine Siebwechselvorrichtung mit einem Gehäuse bekannt, in dem in zwei Bohrungen zwei Bolzen axial verschiebbar gelagert sind. Die Bolzen weisen jeweils eine Durchtrittsöffnung auf, in der jeweils ein Filterelement mit einer Vielzahl von Filterkerzen angeordnet ist. Die zu filtrierende Kunststoffschmelze wir über einen zweigeteilten Eintrittskanal zu dem jeweiligen Bolzen geführt.

Aus der GB 1 386 143 A ist eine Siebwechselvorrichtung mit einem Schieber bekannt, in dem zwei Siebe angeordnet sind. Die Siebe weisen eine Vielzahl von Filterkerzen auf.

Aus der DE 36 17 370 A1 (entspr. US 4 849 103) ist eine Filtervorrichtung bzw. Filteranordnung mit mehreren als Kerzenfilter bezeichneten Filtereinheiten zur gleichmäßigen Filtrierung von Kunststoffschmelzen bekannt. Die Kerzenfilter weisen jeweils einen Stützkörper mit Durchgangsöffnungen auf, auf den im Bereich der Durchgangsöffnungen ein Filtermaterial aufgebracht ist. Das Filtermaterial ist beispielsweise ein Siebgewebe, ein Sintermetall mit Poren oder ein Faservlies. Die zu filtrierende Kunststoffschmelze strömt durch das Filtermaterial und die Durchgangsöffnungen des Stützkörpers in den jeweiligen Kerzenfilter ein und wird hierbei gefiltert. Nachteilig bei dieser Filtervorrichtung und den zugehörigen Kerzenfiltern ist, dass diese einen erheblichen Druckabfall bzw. Differenzdruck der Kunststoffschmelze verursachen und hierdurch der Durchsatz der Kunststoffschmelze durch die Filteranordnung begrenzt ist.

Der Erfindung liegt die Aufgabe zugrunde, ein Filtereinheit der gattungsgemäßen Art derart weiterzubilden, dass auf einfache Weise der Differenzdruck der Kunststoffschmelze reduzierbar und der Durchsatz entsprechend erhöhbar ist.

Diese Aufgabe wird durch eine Filtereinheit mit den Merkmalen des Anspruchs 1 gelöst. Dadurch, dass in dem Innenraum des äußeren Stützkörpers ein innerer Stützkörper mit mehreren inneren Durchgangsöffnungen angeordnet ist und an dem inneren Stützkörper im Bereich der inneren Durchgangsöffnungen ein weiteres inneres Filterelement angeordnet ist, wird die Filterfläche der Filtereinheit auf einfache Weise deutlich erhöht, wodurch der Differenzdruck der Kunststoffschmelze an der Filtereinheit im Vergleich zum Stand der Technik reduziert wird. Die zu filternde Kunststoffschmelze strömt somit einerseits durch das äußere Filterelement und die äußeren Durchgangsöffnungen des äußeren Stützkörpers und andererseits durch das innere Filterelement und die inneren Durchgangsöffnungen des inneren Stützkörpers. Durch die Reduzierung des Differenzdrucks können höhere Durchsätze durch die Filtereinheit und/oder längere Standzeiten der Filterelemente erzielt werden. Die Filterelemente sind in üblicher Weise ausgebildet, beispielsweise als Siebgewebe oder Sintermetallkörper mit Poren. Dadurch, dass der innere Stützkörper mit dem inneren Filterelement im Innenraum des äußeren Stützkörpers angeordnet ist, weist die erfindungsgemäße Filtereinheit keinen im Vergleich zum Stand der Technik erhöhten Bauraum auf, so dass diese in bestehende Filteranordnungen und Siebwechselvorrichtungen eingesetzt werden kann. Die Filtereinheit gewährleistet einen dauerhaft niedrigen Differenzdruck, da die Stützkörper und die daran angeordneten Filterelemente bei Verstopfung und/oder Verschleiß einfach austauschbar sind. Die lösbare Befestigung mittels des Befestigungsrings gewährleistet einen einfachen Austausch der Stützkörper und der daran angeordneten Filterelemente bei Verstopfung und/oder Verschleiß.

Die Filtereinheit gewährleistet einer niedrigen Differenzdruck, da die Kunststoffschmelze durch die Eintrittsöffnung in den von dem inneren Stützkörper begrenzten Innenraum ungehindert einströmen und von dort durch das innere Filterelement strömen kann.

Die Filtereinheit gewährleistet zudem einen niedrigen Differenzdruck der Kunststoffschmelze, da das innere Filterelement aufgrund der topfartigen Ausbildung eine große Filterfläche aufweist. Darüber hinaus wird ein niedriger Differenzdruck der Kunststoffschmelze erzielt, da das innere Filterelement von der Kunststoffschmelze in axialer Richtung ungehindert durchströmbar ist.

Eine Filtereinheit nach Anspruch 2 gewährleistet einen gleichmäßig reduzierten Differenzdruck, da der innere Stützkörper in radialer Richtung gleichmäßig von dem äußeren Stützkörper beabstandet ist und die gefilterte Kunststoffschmelze in den zwischen den Stützkörpern gebildete ringförmigen Zwischenraum gleichmäßig ein- und wieder ausströmen kann.

Eine Filtereinheit nach Anspruch 3 gewährleistet eine einfache und sichere Befestigung des äußeren Filterelements.

Eine Filtereinheit nach Anspruch 4 gewährleistet eine sichere, kompakte und robuste Anordnung der Filterelemente, da diese dem jeweils zugehörigen Stützkörper in Flussrichtung der Kunststoffschmelze vorgeordnet sind.

Eine Filtereinheit nach Anspruch 5 ermöglicht eine große Filterfläche des inneren Filterelements.

Eine Filtereinheit nach Anspruch 6 gewährleistet einen niedrigen Differenzdruck der Kunststoffschmelze, da der Durchmesser bzw. Radius des inneren Stützelements einerseits eine große Filterfläche des inneren Filterelements ermöglicht, jedoch andererseits der radiale Abstand zwischen den Stützkörpern noch groß genug ist, damit die gefilterte Kunststoffschmelze aus dem Zwischenraum zwischen den Stützkörpern gut ausströmen kann.

Eine Filtereinheit nach Anspruch 7 ermöglicht eine Optimierung des Differenzdrucks der Kunststoffschmelze, da die Filterfläche des inneren Filterelements mit zunehmender innerer Filterlänge vergrößerbar ist.

Eine Filteranordnung gemäß Anspruch 8 gewährleistet einen niedrigen Differenzdruck der Kunststoffschmelze, da eine Vielzahl von den erfindungsgemäßen Filtereinheiten zur Filterung der Kunststoffschmelze einsetzbar ist. Durch die lösbare Anordnung der erfindungsgemäßen Filtereinheiten an dem Filterträger können bestehende Filteranordnungen nach dem Stand der Technik mit den erfindungsgemäßen Filtereinheiten nachgerüstet werden. Weiterhin können verstopfte und/oder verschlissene Filtereinheiten einfach ausgewechselt und gereinigt werden.

Eine Filtereinheit nach Anspruch 9 stellt eine optimale Anordnung der Filtereinheiten in Bezug auf die gesamte zu erzielende Filterfläche und den hieraus resultierenden Differenzdruck der Kunststoffschmelze dar.

Eine Siebwechselvorrichtung nach Anspruch 10 ermöglicht das Filtern von Kunststoffschmelzen in einer Extruder-Anlage mit einem dauerhaft niedrigen Differenzdruck der Kunststoffschmelze. Hierdurch kann der Durchsatz der Kunststoffschmelze durch die Extruder-Anlage optimiert werden. Bei einer erforderlichen Wartung einer der Filteranordnungen kann das Filtern der Kunststoffschmelze ohne Unterbrechung fortgeführt werden, indem das Schiebeelement in üblicher Weise so verlagert wird, dass die gewartete zweite Filteranordnung zum Einsatz kommt.

Weitere Merkmale, Vorteile und Einzelheiten der Erfindung ergeben sich aus der nachfolgenden Beschreibung eines Ausführungsbeispiels. Es zeigen:

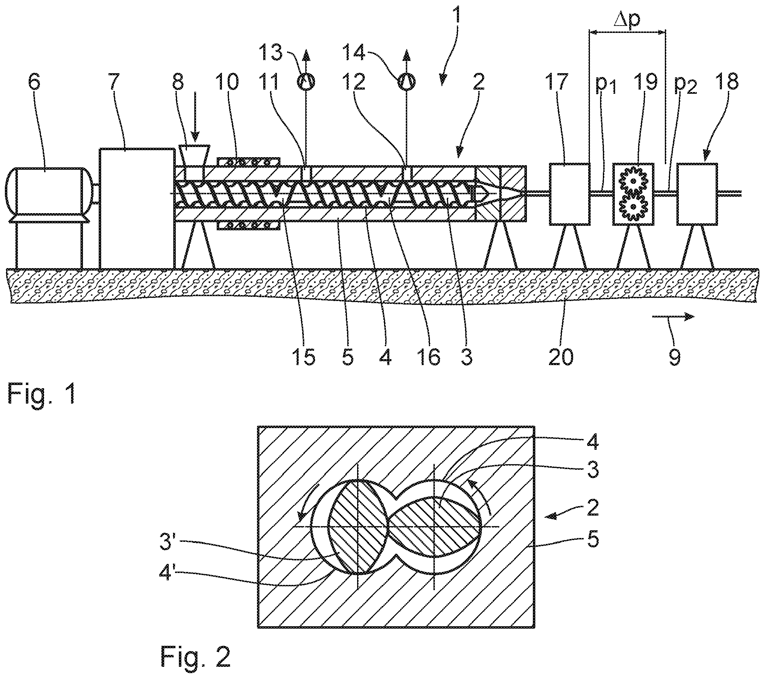

- Fig. 1: eine schematische Darstellung einer Extruder-Anlage mit einem Extruder und einer nachgeordneten Siebwechselvorrichtung zum Filtern von Kunststoffschmelzen,
- Fig. 2: einen Querschnitt durch den in Fig. 1 dargestellten Extruder,
- Fig. 3: eine perspektivische Darstellung der Siebwechselvorrichtung in Fig. 1,

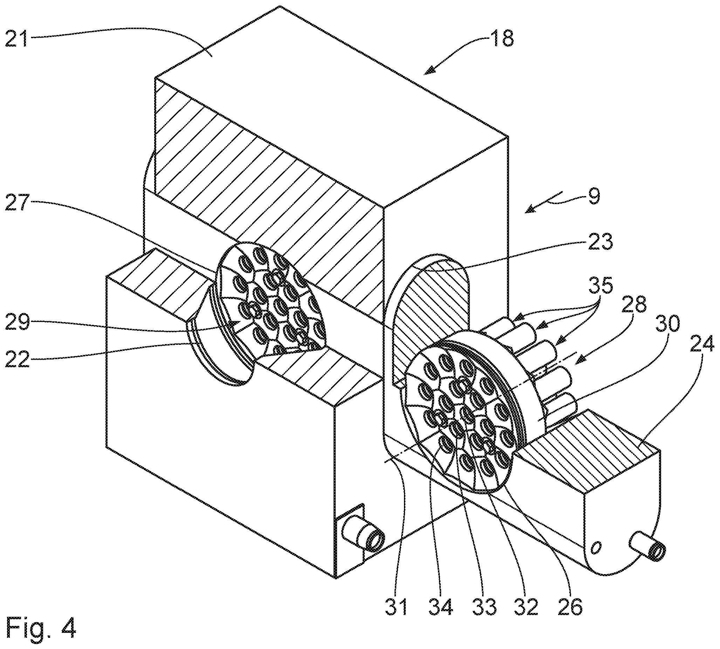

- Fig. 4: eine teilweise geschnittene Darstellung der Siebwechselvorrichtung in Fig. 3 mit zwei beabstandeten Filteranordnungen und daran angeordneten Filtereinheiten,

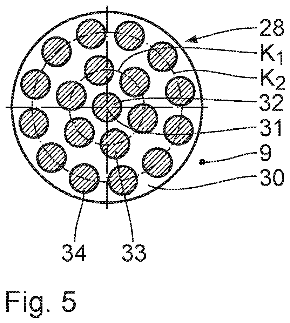

- Fig. 5: eine schematische axiale Draufsicht auf eine der Filteranordnungen in Fig. 4,

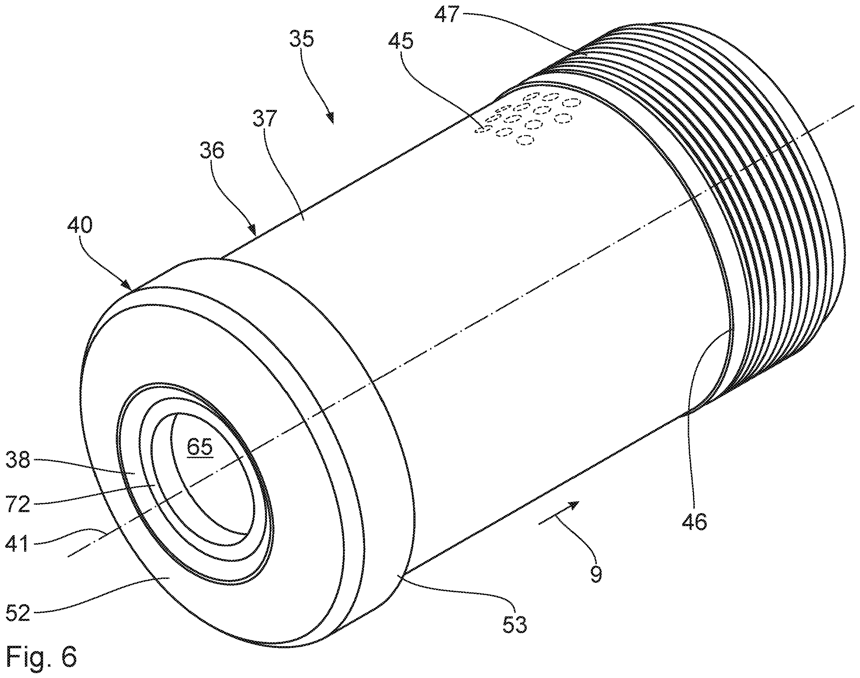

- Fig. 6: eine erste perspektivische Darstellung einer Filtereinheit in Fig. 4 ohne zugehörige Filterelemente,

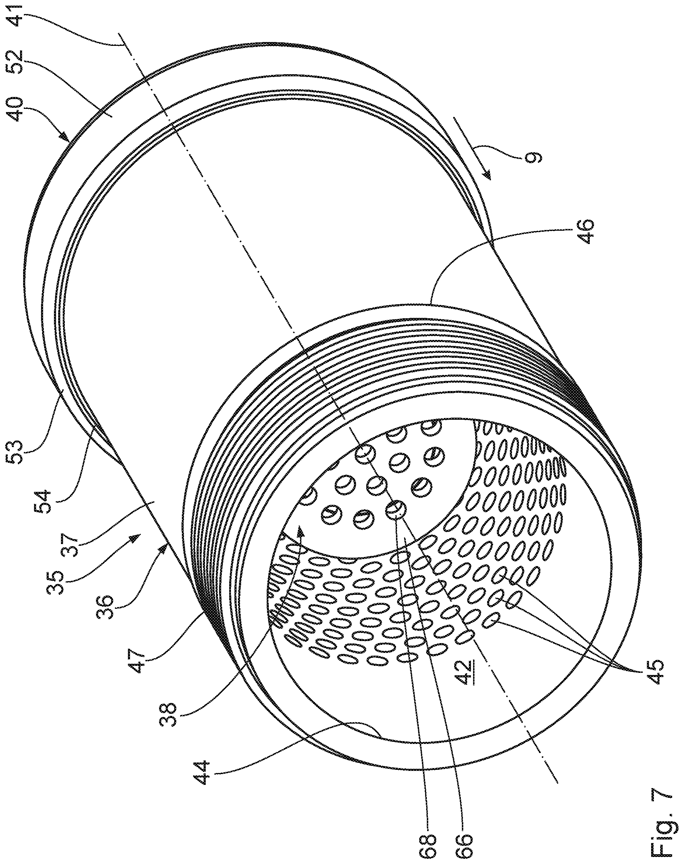

- Fig. 7: eine zweite perspektivische Darstellung der Filtereinheit in Fig. 6, und

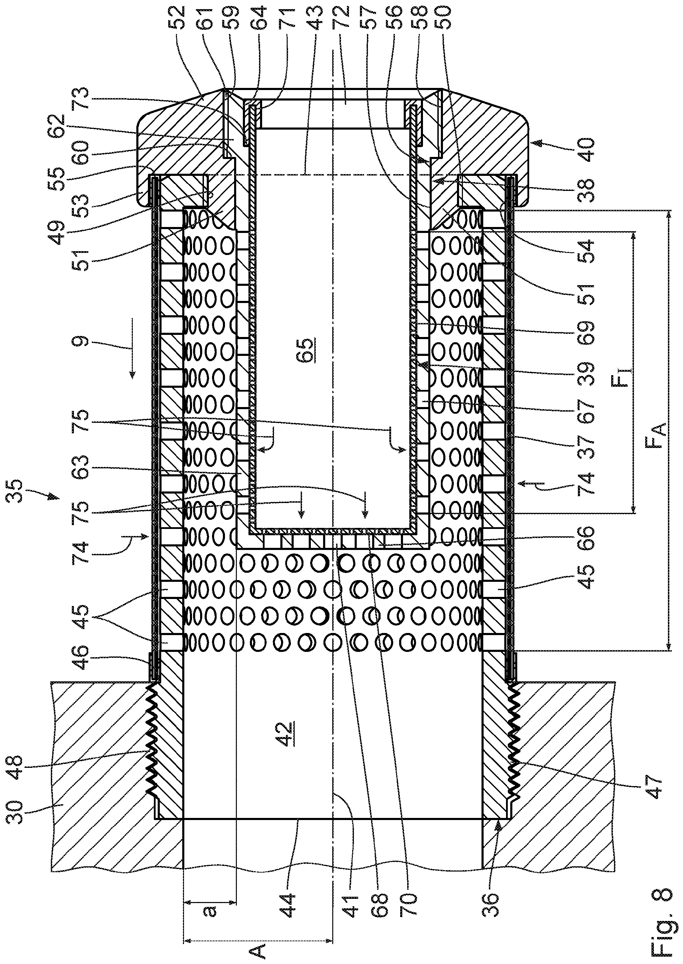

- Fig. 8: einen Axialschnitt durch die Filtereinheit in Fig. 6 einschließlich der zugehörigen Filterelemente.

Eine Extruder-Anlage 1 weist zur Aufbereitung von Kunststoff einen Zweiwellen-Extruder 2 auf, der in üblicher Weise ausgestaltet ist. Der Extruder 2 weist zwei Schneckenwellen 3, 3' auf. Diese sind in entsprechenden Bohrungen 4, 4' eines Gehäuses 5 angeordnet. Die Schneckenwellen 3, 3' sind dichtkämmend und gleichsinnig drehend ausgebildet. Der Antrieb der Schneckenwellen 3, 3' erfolgt durch einen Elektromotor 6 über ein Untersetzungs- und Verzweigungsgetriebe 7, an dem das Gehäuse 5 angeflanscht ist.

Benachbart zu dem Getriebe 7, also am stromaufwärtigen Ende des Extruders 2, mündet ein Zuführtrichter 8 in das Gehäuse 5 ein. In einer Förderrichtung 9 nach dem Trichter 8 ist das Gehäuse 5 mit einer Heizung 10 versehen. Im Anschluss daran sind in Förderrichtung 9 nacheinander zwei aus dem Gehäuse 5 ausmündende Entgasungsöffnungen 11, 12 vorgesehen, die jeweils an eine Vakuumpumpe 13, 14 angeschlossen sind. In Förderrichtung 9 vor, also stromaufwärts jeder Entgasungsöffnung 11, 12, sind an den Schneckenwellen 3, 3' Staueinrichtungen 15, 16 in Form von entgegen der Förderrichtung 9 fördernden Schneckenabschnitten vorgesehen.

Der Extruder 1 mündet an seinem in Förderrichtung 9 stromabwärtigen Ende in ein Anfahrventil 17, dem in Förderrichtung 9 eine Zahnradpumpe 19 nachgeordnet ist. Die Zahnradpumpe 19 mündet in eine Siebwechselvorrichtung 18. Die beschriebenen Bauelemente sind auf einem Fundament 20 angeordnet.

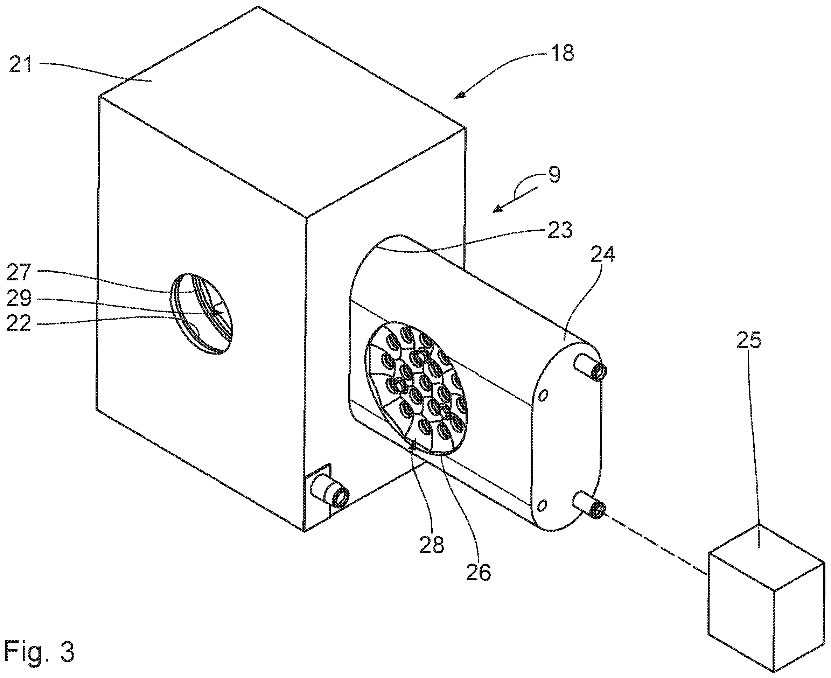

Die Siebwechselvorrichtung 18 weist ein Gehäuse 21 auf, in dem ein in der Förderrichtung 9 verlaufender Schmelzekanal 22 für die in dem Extruder 2 erzeugte Kunststoffschmelze ausgebildet ist. Ferner ist in dem Gehäuse 21 eine quer zu der Förderrichtung 9 verlaufende und den Schmelzekanal 22 durchquerende Führungsbohrung 23 ausgebildet. In der Führungsbohrung 23 ist ein plattenartiges Schiebeelement 24 angeordnet, das mittels eines Betätigungsantriebs 25 quer zu der Förderrichtung 9 verlagerbar ist. Der Betätigungsantrieb 25 ist beispielsweise hydraulisch oder elektromechanisch ausgebildet und in Fig. 3 lediglich angedeutet. In dem Schiebeelement 24 sind zwei durchgehende Aufnahmeöffnungen 26, 27 ausgebildet, in denen jeweils eine Filteranordnung 28, 29 gelagert ist. Die Aufnahmeöffnungen 26, 27 sind quer zu der Förderrichtung 9 derart beabstandet, dass sich jeweils eine der Filteranordnungen 28, 29 außerhalb des Gehäuses 21 befindet, wenn sich die jeweils andere Filteranordnung 28, 29 in dem Schmelzekanal 22 befindet.

Die Filteranordnungen 28, 29 sind identisch ausgebildet, so dass nachfolgend lediglich die Filteranordnung 28 im Detail beschrieben ist. Die Filteranordnung 28 weist einen im Querschnitt kreisförmigen Filterträger 30 mit einer in der Förderrichtung 9 verlaufenden Träger-Mittellängsachse 31 auf. In dem Filterträger 30 sind mehrere in Richtung der Träger-Mittellängsachse 31 verlaufende Träger-Durchgangsöffnungen 32, 33, 34 ausgebildet. Eine erste Träger-Durchgangsöffnung 32 ist konzentrisch zu der Träger-Mittellängsachse 31 angeordnet. Eine Gruppe von sechs zweiten Träger-Durchgangsöffnungen 33 ist entlang eines ersten Kreises K₁ angeordnet, der wiederum konzentrisch zu der Träger-Mittellängsachse 31 angeordnet ist. Die zweiten Träger-Durchgangsöffnungen 33 sind gleichmäßig entlang des Kreises K₁ verteilt. Eine weitere Gruppe von zwölf dritten Träger-Durchgangsöffnungen 34 ist entlang eines zweiten Kreises K₂ angeordnet, der konzentrisch zu der Träger-Mittellängsachse 31 angeordnet ist und den ersten Kreis K₁ umgibt. Die dritten Träger-Durchgangsöffnungen 34 sind gleichmäßig entlang des Kreises K₂ verteilt.

Im Bereich der Träger-Durchgangsöffnungen 32, 33, 34 ist jeweils eine Filtereinheit 35 lösbar an dem Filterträger 30 befestigt. Die Filtereinheiten 35 sind dem Filterträger 30 in der Förderrichtung 9 vorgeordnet.

Die Filtereinheiten 35 sind identisch ausgebildet, so dass nachfolgend lediglich eine Filtereinheit 35 im Detail beschrieben ist. Die Filtereinheit 35 umfasst einen äußeren Stützkörper 36 mit einem zugehörigen äußeren Filterelement 37 und einen inneren Stützkörper 38 mit einem zugehörigen inneren Filterelement 39 sowie einen Befestigungsring 40 zur Verbindung der Stützkörper 36, 38. Der äußere Stützkörper 36 ist hohlzylinderförmig ausgebildet und weist eine Mittellängsachse 41 auf, die in Richtung der Förderrichtung 9 verläuft. Der äußere Stützkörper 36 begrenzt einen Innenraum 42, in den an einer stromaufwärtigen Seite des Stützkörpers 36 eine erste Öffnung 43 und an einer stromabwärtigen Seite des Stützkörpers 36 eine zweite Öffnung 44 mündet. Ferner münden in den Innenraum 42 eine Vielzahl von in dem äußeren Stützkörper 36 ausgebildeten äußeren Durchgangsöffnungen 45, die in radialer Richtung relativ zu der Mittellängsachse 41 verlaufen und gleichmäßig über den Umfang des äußeren Stützkörpers 36 verteilt sind.

Das äußere Filterelement 37 ist ebenfalls hohlzylinderförmig ausgebildet und liegt an einer dem inneren Stützkörper 38 abgewandten Seite im Bereich der äußeren Durchgangsöffnungen 45 an dem äußeren Stützkörper 36 an. An der stromabwärtigen Seite bildet der äußere Stützkörper 36 einen ersten Anschlag 46 für das äußere Filterelement 37 aus, so dass dieses in einfacher Weise auf den äußeren Stützkörper 36 bis zu dem ersten Anschlag 46 aufschiebbar ist. An der stromabwärtigen Seite weist der äußere Stützkörper 36 ferner ein Außengewinde 47 auf, das dem Anschlag 46 in Förderrichtung 9 nachgeordnet ist. Der äußere Stützkörper 36 ist mit dem Außengewinde 47 in ein zugehöriges Innengewinde 48 eingeschraubt, das im Bereich einer der Träger-Durchgangsöffnungen 32, 33, 34 in dem Filterträger 30 ausgebildet ist. Auf diese Weise ist die Filtereinheit 35 lösbar an dem Filterträger 30 angeordnet.

Der innere Stützkörper 38 ist mittels des Befestigungsrings 40 im Wesentlichen in teilweise in dem Innenraum 42 angeordnet. Hierzu weist der äußere Stützkörper 36 an der stromaufwärtigen Seite im Bereich der ersten Öffnung 43 ein Innengewinde 49 auf. An diesem Innengewinde 49 ist der Befestigungsring 40 mittels eines zugehörigen Außengewindes 50 lösbar befestigt. Das Außengewinde 50 ist an einem ersten ringförmigen Abschnitt 51 des Befestigungsrings 40 ausgebildet, der im befestigten Zustand sich durch die erste Öffnung 43 in den Innenraum 42 erstreckt. An dem ersten Abschnitt 51 schließt ein zweiter Abschnitt 52 mit einem größeren Durchmesser an, der im eingeschraubten Zustand des Befestigungsrings 40 stirnseitig gegen den äußeren Stützkörper 36 anliegt. Der zweite Abschnitt 52 ragt in radialer Richtung über den äußeren Stützkörper 36 hinaus und weist einen in Richtung der Mittellängsachse 41 verlaufenden ringförmigen Vorsprung 53 auf, so dass zwischen dem Vorsprung 53 und dem äußeren Stützkörper 36 ein Ringraum 54 ausgebildet ist, in den sich das äußere Filterelement 37 erstreckt. Der zweite Abschnitt 52 bildet für das äußere Filterelement 37 in axialer Richtung einen zweiten Anschlag 55 aus.

Der innere Stützkörper 38 ist lösbar an dem Befestigungsring 40 bzw. dem äußeren Stützkörper 36 befestigt. Hierzu ist in dem Befestigungsring 40 eine im Durchmesser gestufte Durchgangsbohrung 56 ausgebildet, die einen ersten Bohrungsabschnitt 57 und einen im Durchmesser größeren zweiten Bohrungsabschnitt 58 aufweist. Im Bereich des Bohrungsabschnitts 58 weist der Befestigungsring 40 ein Innengewinde 59 auf, das sich bis zu einem dritten Anschlag 60 erstreckt. Der innere Stützkörper 38 ist mit einem Außengewinde 61 in das Innengewinde 59 eingeschraubt und damit lösbar mit dem Befestigungsring 40 verbunden.

Der innere Stützkörper 38 weist einen hohlzylinderförmigen ersten Wandabschnitt 62 und einen daran angeordneten hohlzylinderförmigen zweiten Wandabschnitt 63 auf, der einen im Vergleich zum ersten Wandabschnitt 62 kleineren Innen- und Außendurchmesser aufweist. Der erste Wandabschnitt 62 ist an einer stromaufwärtigen Seite des inneren Stützelements 38 angeordnet und weist an seiner Außenseite das Außengewinde 61 auf. Der erste Wandabschnitt 62 liegt im befestigten Zustand des Stützkörpers 38 an dem Anschlag 60 an. Ferner bildet der erste Wandabschnitt 62 an der stromaufwärtigen Seite des inneren Stützkörpers 38 eine Eintrittsöffnung 64 aus, durch die Kunststoffschmelze in einen von dem inneren Stützkörper 38 begrenzten Innenraum 65 einströmen kann. Gegenüberliegend zu der Eintrittsöffnung 64, also an der stromabwärtigen Seite des inneren Stützkörpers 38, weist dieses einen quer zu der Mittellängsachse 41 verlaufenden Bodenabschnitt 66 auf, der mit dem zweiten Wandabschnitt 63 verbunden ist.

Der innere Stützkörper 38 ist konzentrisch zu der Mittellängsachse 41 angeordnet und erstreckt sich mit dem zweiten Wandabschnitt 63 und dem Bodenabschnitt 66 in den Innenraum 42 des äußeren Stützkörpers 38. In dem zweiten Wandabschnitt 63 und dem Bodenabschnitt 66 sind eine Vielzahl von inneren Durchgangsöffnungen 67, 68 ausgebildet. Die in dem zweiten Wandabschnitt 63 ausgebildeten Durchgangsöffnungen 67 verlaufen radial zu der Mittellängsachse 41, wohingegen die in dem Bodenabschnitt 66 ausgebildeten Durchgangsöffnungen 68 parallel zu der Mittellängsachse 41 verlaufen.

Das innere Filterelement 39 ist als Filtereinsatz ausgebildet und weist eine topfartige Form auf. Das innere Filterelement 39 weist entsprechend dem inneren Stützkörper 38 einen hohlzylinderförmigen Filterwandabschnitt 69 und einen Filterbodenabschnitt 70 auf, die an einer stromabwärtigen Seite des inneren Filterelements 39 miteinander verbunden sind. An dem dem Filterbodenabschnitt 70 gegenüberliegenden Ende des Filterelements 39 bildet dieses eine Filtereintrittsöffnung 71 aus. Der Filterwandabschnitt 69 ist im Bereich der Filtereintrittsöffnung 71 durch einen aufgesteckten Versteifungsring 72 versteift. Im eingesetzten Zustand liegt das innere Filterelement 39 gegen den inneren Stützkörper 38 an, wobei der Versteifungsring 72 gegen einen durch den Wandabschnitt 63 gebildeten Anschlag 73 des inneren Stützkörpers 38 anliegt. Das innere Filterelement 39 ist somit an einer dem äußeren Stützkörper 36 abgewandten Seite des inneren Stützkörpers 38 angeordnet. Das innere Filterelement 39 liegt somit im Bereich der inneren Durchgangsöffnungen 67, 68 an dem inneren Stützkörper 38 an.

Die Filterelemente 37, 39 sind in üblicher Weise ausgebildet, beispielsweise als Siebgewebe oder Sintermetallkörper mit Poren. Die Filterelemente 37, 39 können je nach der zu filternde Kunststoffschmelze eine bestimmte Siebmaschengröße bzw. Porengröße aufweisen.

Der innere Stützkörper 38 weist von dem äußeren Stützkörper 36 in radialer Richtung einen Abstand a auf, für den bezogen auf einen radialen Abstand A des äußeren Stützkörpers 36 von der Mittellängsachse 41 gilt: 0,2 ≤ a/A ≤ 0,8, insbesondere 0,3 ≤ a/A ≤ 0,7 und insbesondere 0,4 ≤ a/A ≤ 0,6.

Weiterhin definieren die äußeren Durchgangsöffnungen 45 in Richtung der Mittellängsachse 41 eine äußere Filterlänge F_{A} und die inneren Durchgangsöffnungen 67 in entsprechender Weise eine innere Filterlänge F_{I}, wobei gilt: F_{I} / F_{A} ≥ 0,5, insbesondere F_{I} / F_{A} ≥ 0,6 und insbesondere F_{I} / F_{A} ≥ 0,7.

Der aufzubereitende Kunststoff wird durch den Trichter 8 in den Extruder 2 eingebracht und dort aufgeschmolzen. Die aus dem Extruder 2 austretende Kunststoffschmelze durchströmt das Anfahrventil 17 und wird mittels der Zahnradpumpe 19 weiterbefördert und gelangt anschließend in die Siebwechselvorrichtung 18, wo Verunreinigungen in der Kunststoffschmelze ausgefiltert werden.

In der Siebwechselvorrichtung 18 durchströmt die Kunststoffschmelze die in dem Schmelzekanal 22 befindliche Filteranordnung 28 bzw. 29. Hierbei tritt die Kunststoffschmelze bei jeder Filtereinheit 35 einerseits in einer ersten Schmelzeflussrichtung 74 durch das äußere Filterelement 37 und die Durchgangsöffnungen 45 des äußeren Stützkörpers 36 in den Innenraum 42 ein und wird hierbei gefiltert. Andererseits tritt die Kunststoffschmelze durch die Filtereintrittsöffnung 71 in den Innenraum 65 ein und durchströmt von dort in zweiten Schmelzeflussrichtungen 75 das innere Filterelement 39 und die Durchgangsöffnungen 67, 68 des inneren Stützkörpers 38 und wird hierbei gefiltert. Dadurch, dass sowohl das äußere Filterelement 37 als auch das innere Filterelement 39 Filterfläche bereitstellen, verursacht die Filteranordnung 28 bzw. 29 lediglich einen vergleichsweise geringen Differenzdruck Δp = p₁ - p₂ der Kunststoffschmelze. Hierbei ist p₁ der Druck der Kunststoffschmelze vor der Filteranordnung 28, 29 und p₂ der Druck der Kunststoffschmelze nach der Filteranordnung 28 bzw. 29. Weiterhin verursacht die Filteranordnung 28 bzw. 29 deswegen einen vergleichsweise geringen Differenzdruck Δp, da die Kunststoffschmelze durch die Filtereintrittsöffnung 71 in den Innenraum 65 einströmt und von dort einerseits in radialer Schmelzeflussrichtung 75 durch den Filterwandabschnitt 69 und in axialer Schmelzeflussrichtung 75 durch den Filterbodenabschnitt 70 des inneren Filterelements 39 und den inneren Stützkörper 38 strömt, wodurch ein geringer Strömungswiderstand erzielt wird. Der innere Stützkörper 38 weist hierzu im Verhältnis zu dem äußeren Stützkörper 36 einen Durchmesser derart auf, dass einerseits die Filterfläche des inneren Filterelements 39 ausreichend groß ist und andererseits der zwischen den Stützkörpern 36, 38 gebildete Zwischenraum nicht so klein ist, dass ein Ausströmen der Kunststoffschmelze beeinträchtigt wird. Hierdurch kann die Beanspruchung der Kunststoffschmelze reduziert und/oder höhere Durchsätze erzielt werden. Durch den niedrigeren Differenzdruck können weiterhin die Standzeiten der Filterelemente 37, 39 verlängert werden.

Dadurch, dass die Filtereinheiten 35 vollständig demontierbar sind, können die Filtereinheiten 35 in einfacher Weise gewartet werden. Hierbei muss der Betrieb der Extruder-Anlage 1 nicht unterbrochen werden, da bei einer erforderlichen Wartung einer der Filteranordnungen 28, 29 mittels der Siebwechselvorrichtung 18 die jeweils andere Filteranordnung 28, 29 in Einsatz gebracht werden kann, so dass die zu wartende Filteranordnung 28, 29 für eine Wartung zur Verfügung steht.

## Patentansprüche

1. Filtereinheit für eine Extruder-Anlage mit
- einem äußeren Stützkörper (36), der
-- hohlzylinderförmig ausgebildet ist und eine Mittellängsachse (41) aufweist,
-- einen Innenraum (42) begrenzt und mehrere in diesen mündende Durchgangsöffnungen (45) aufweist,
- einem an dem äußeren Stützkörper (36) im Bereich der Durchgangsöffnungen (45) angeordneten äußeren Filterelement (37), wobei
-- in dem Innenraum (42) ein innerer Stützkörper (38) mit mehreren inneren Durchgangsöffnungen (67, 68) angeordnet ist,
-- der innere Stützkörper (38) mindestens einen hohlzylinderförmigen Wandabschnitt (62, 63) und einen damit verbundenen Bodenabschnitt (66) aufweist,
-- an dem inneren Stützkörper (38) im Bereich der inneren Durchgangsöffnungen (67, 68) ein inneres Filterelement (39) angeordnet ist,
-- das innere Filterelement (39) topfartig ausgebildet ist,
- einem Befestigungsring (40) zur Verbindung der Stützkörper (36, 38), wobei der innere Stützkörper (38) lösbar an dem äußeren Stützkörper (36) befestigt ist, indem der innere Stützkörper (38) lösbar an dem Befestigungsring (40) und der Befestigungsring (40) lösbar an dem äußeren Stützkörper (36) befestigt ist,
**dadurch gekennzeichnet,**
**dass** der innere Stützkörper (38) mit seinem Außengewinde (61) in ein Innengewinde (59) des Befestigungsrings (40) eingeschraubt und lösbar mit diesem verbunden ist,
**dass** der mindestens eine Wandabschnitt (62, 63) gegenüberliegend zu dem Bodenabschnitt (66) eine Eintrittsöffnung (64) für eine Kunststoffschmelze ausbildet, und
**dass** das innere Filterelement (39) als ein durch die Eintrittsöffnung (64)
einsetzbarer Filtereinsatz ausgebildet ist.

2. Filtereinheit nach Anspruch 1, **dadurch gekennzeichnet, dass** der äußere Stützkörper (36) und der innere Stützkörper (38) konzentrisch zu der Mittellängsachse (41) angeordnet sind.

3. Filtereinheit nach Anspruch 1 oder 2, **dadurch gekennzeichnet, dass** der Befestigungsring (40) in Richtung der Mittellängsachse (41) einen Anschlag (55) für das äußere Filterelement (37) ausbildet.

4. Filtereinheit nach einem der Ansprüche 1 bis 3, **dadurch gekennzeichnet, dass**
- das äußere Filterelement (37) an einer dem inneren Stützkörper (38) abgewandten Seite des äußeren Stützkörpers (36) angeordnet ist, und
- das innere Filterelement (39) an einer dem äußeren Stützkörper (36) abgewandten Seite des inneren Stützkörpers (38) angeordnet ist.

5. Filtereinheit nach einem der Ansprüche 1 bis 4, **dadurch gekennzeichnet, dass**
die inneren Durchgangsöffnungen (67, 68) in dem Wandabschnitt (63) und dem Bodenabschnitt (66) ausgebildet sind.

6. Filtereinheit nach einem der Ansprüche 1 bis 5, **dadurch gekennzeichnet, dass**
für einen radialen Abstand a zwischen dem inneren Stützkörper (38) und dem äußeren Stützkörper (36) bezogen auf einen radialen Abstand A des äußeren Stützkörpers (36) von der Mittellängsachse (41) gilt: 0,2 ≤ a/A ≤ 0,8, insbesondere 0,3 ≤ a/A ≤ 0,7 und insbesondere 0,4 ≤ a/A ≤ 0,6.

7. Filtereinheit nach einem der Ansprüche 1 bis 6, **dadurch gekennzeichnet, dass**
die äußeren Durchgangsöffnungen (45) in Richtung der Mittellängsachse (41) eine äußere Filterlänge F_{A} und die inneren Durchgangsöffnungen (67) in Richtung der Mittellängsachse (41) eine innere Filterlänge F_{I} definieren, wobei gilt: F_{I}/F_{A} ≥ 0,5, insbesondere F_{I}/F_{A} ≥ 0,6 und insbesondere F_{I}/F_{A} ≥ 0,7.

8. Filteranordnung für eine Extruder-Anlage mit
- einem Filterträger (30), der eine Träger-Mittellängsachse (31) und mehrere in Richtung der Träger-Mittellängsachse (31) verlaufende Träger-Durchgangsöffnungen (32, 33, 34) aufweist,
**dadurch gekennzeichnet, dass**
im Bereich der Träger-Durchgangsöffnungen (32, 33, 34) jeweils eine Filtereinheit (35) nach einem der Ansprüche 1 bis 7 lösbar an dem Filterträger (30) befestigt ist.

9. Filteranordnung nach Anspruch 8, **dadurch gekennzeichnet, dass**
- eine erste Träger-Durchgangsöffnung (32) konzentrisch zu der Träger-Mittellängsachse (31) angeordnet ist,
- mindestens sechs zweite Träger-Durchgangsöffnungen (33) entlang eines ersten Kreises (K₁) angeordnet sind, der konzentrisch zu der Träger-Mittellängsachse (31) angeordnet ist, und
- mindestens zwölf dritte Träger-Durchgangsöffnungen (34) entlang eines zweiten Kreises (K₂) angeordnet sind, der konzentrisch zu der Träger-Mittellängsachse (31) angeordnet ist und den ersten Kreis (K₁) umgibt.

10. Siebwechselvorrichtung für eine Extruder-Anlage mit
- einem Gehäuse (21),
- einem in dem Gehäuse (21) verlaufenden Schmelzekanal (22),
- einer quer zu dem Schmelzekanal (22) und durch diesen in dem Gehäuse (21) verlaufenden Führungsbohrung (23),
- einem in der Führungsbohrung (23) angeordneten Schiebeelement (24),
- zwei beabstandet an dem Schiebeelement (24) gelagerten Filteranordnungen (28, 29), wobei jede Filteranordnung (28, 29) einen Filterträger (30) mit einer Träger-Mittellängsachse (31) und mehreren in Richtung der Träger-Mittellängsachse (31) verlaufenden Träger-Durchgangsöffnungen (32, 33, 34) aufweist,
**dadurch gekennzeichnet, dass**
im Bereich der Träger-Durchgangsöffnungen (32, 33, 34) jeweils eine Filtereinheit (35) nach einem der Ansprüche 1 bis 7 lösbar an dem zugehörigen Filterträger (30) befestigt ist.

## Claims

1. Filter unit for an extruder system with
- an outer support body (36), which
-- is hollow cylindrical and has a centre longitudinal axis (41),
-- limits an interior (42) and has a plurality of through-openings (45) opening therein,
- an outer filter element (37) arranged on the outer support body (36) in the region of the through-openings (45),
wherein
-- an inner support body (38) with a plurality of inner through-openings (67, 68) is arranged in the interior (42),
-- the inner support body (38) has at least one hollow cylindrical wall portion (62, 63) and a base portion (66) connected thereto,
-- an inner filter element (39) is arranged on the inner support body (38) in the region of the inner through-openings (67, 68),
-- the inner filter element (39) is pot-like,
- a fastening ring (40) for connecting the support bodies (36, 38), wherein the inner support body (38) is releasably fastened to the outer support body (36) in that the inner support body (38) is releasably fastened to the fastening ring (40), and the fastening ring (40) is releasably fastened to the outer support body (36),
**characterized in**
**that** the inner support body (38) is screwed by its external thread (61) into an internal thread (59) of the fastening ring (40) and releasably fastened thereto,
**that** the at least one wall portion (62, 63) opposite the base portion (66) forms an inlet opening (64) for a plastic melt, and
**that** the inner filter element (39) is configured as a filter insert insertable through the inlet opening (64).

2. Filter unit according to claim 1, **characterized in that** the outer support body (36) and the inner support body (38) are arranged concentrically with respect to the centre longitudinal axis (41).

3. Filter unit according to claim 1 or 2, **characterized in that** the fastening ring (40) in the direction of the centre longitudinal axis (41) forms a stop (55) for the outer filter element (37).

4. Filter unit according to any one of claims 1 to 3, **characterized in that**
- the outer filter element (37) is arranged on a side of the outer support body (36) remote from the inner support body (38), and
- the inner filter element (39) is arranged on a side of the inner support body (38) remote from the outer support body (36).

5. Filter unit according to any one of claims claim 1 to 4, **characterized in that**
the inner through-openings (67, 68) are formed in the wall portion (63) and the base portion (66).

6. Filter unit according to any one of claims 1 to 5, **characterized in that** for a radial spacing a between the inner support body (38) and the outer support body (36) based on a radial spacing A of the outer support body (36) from the centre longitudinal axis (41) there applies: 0.2 ≤ a/A ≤ 0.8, in particular 0.3 ≤ a/A ≤ 0.7 and in particular 0.4 ≤ a/A ≤ 0.6.

7. Filter unit according to any one of claims 1 to 6, **characterized in that** the outer through-openings (45) in the direction of the centre longitudinal axis (41) define an outer filter length F_{A} and the inner through-openings (67) in the direction of the centre longitudinal axis (41) define an inner filter length F_{I}, wherein there applies: F_{I}/F_{A} ≥ 0.5, in particular F_{I}/F_{A} ≥ 0.6 and in particular F_{I}/F_{A} ≥ 0.7.

8. Filter arrangement for an extruder system with
- a filter carrier (30), which has a carrier centre longitudinal axis (31) and a plurality of carrier through-openings (32, 33, 34) running in the direction of the carrier centre longitudinal axis (31),
**characterized in that**
a filter unit (35) according to any one of claims 1 to 7 is in each case releasably fastened to the filter carrier (30) in the region of the carrier through-openings (32, 33, 34).

9. Filter arrangement according to claim 8, **characterized in that**
- a first carrier through-opening (32) is arranged concentrically with respect to the carrier centre longitudinal axis (31),
- at least six second carrier through-openings (33) are arranged along a first circle (K₁), which is arranged concentrically with respect to the carrier centre longitudinal axis (31), and
- at least twelve third carrier through-openings (34) are arranged along a second circle (K₂), which is arranged concentrically with respect to the carrier centre longitudinal axis (31) and surrounds the first circle (K₁).

10. Sieve changing device for an extruder system with
- a housing (21),
- a melt channel (22) running in the housing (21),
- a guide bore (23) running transverse to the melt channel (22) and through the latter in the housing (21),
- a slide element (24) arranged in the guide bore (23),
- two filter arrangements (28, 29) mounted spaced apart on the slide element (24), each filter arrangement (28, 29) having a filter carrier (30) with a carrier centre longitudinal axis (31) and a plurality of carrier through-openings (32, 33, 34) running in the direction of the carrier centre longitudinal axis (31),
**characterized in that**
a filter unit (35) according to any one of claims 1 to 7 is releasably fastened in each case to the associated filter carrier (30) in the region of the carrier through-openings (32, 33, 34).

## Revendications

1. Unité de filtration pour une installation d'extrusion comprenant
- un corps d'appui extérieur (36), qui
-- est de forme cylindrique creuse et présente un axe longitudinal médian (41),
-- délimite un espace intérieur (42) et comprend plusieurs ouvertures de passage (45) débouchant dans celui-ci,
- un élément de filtration extérieur (37) agencé sur le corps d'appui extérieur (36) dans la zone des ouvertures de passage (45), dans lequel
-- un corps d'appui intérieur (38) pourvu de plusieurs ouvertures de passage intérieures (67, 68) est agencé dans l'espace intérieur (42),
-- le corps d'appui intérieur (38) comprend au moins une partie de paroi (62, 63) de forme cylindrique creuse et une partie fond (66) reliée à celle-ci,
-- un élément de filtration intérieur (39) est agencé sur le corps d'appui intérieur (38) dans la zone des ouvertures de passage intérieures (67, 68),
-- l'élément de filtration intérieur (39) est en forme de pot,
- une bague de fixation (40) permettant de relier les corps d'appui (36, 38), dans laquelle le corps d'appui intérieur (38) est fixé de manière détachable sur le corps d'appui extérieur (36), par le fait que le corps d'appui intérieur (38) est fixé de manière détachable sur la bague de fixation (40) et que la bague de fixation (40) est fixée de manière détachable sur le corps d'appui extérieur (36),
**caractérisée**
**en ce que** le corps d'appui intérieur (38) est vissé au moyen de son filet extérieur (61) dans un filet intérieur (59) de la bague de fixation (40) et est relié à celle-ci de manière détachable,
**en ce que** ladite au moins une partie de paroi (62, 63) constitue à l'opposé de la partie fond (66) une ouverture d'entrée (64) pour une masse fondue de matière plastique, et
**en ce que** l'élément de filtration intérieur (39) est réalisé sous la forme d'une garniture de filtre pouvant être insérée à travers l'ouverture d'entrée (64).

2. Unité de filtration selon la revendication 1, **caractérisée en ce que**
le corps d'appui extérieur (36) et le corps d'appui intérieur (38) sont agencés de manière concentrique par rapport à l'axe longitudinal médian (41).

3. Unité de filtration selon la revendication 1 ou 2, **caractérisée en ce que**
la bague de fixation (40) constitue en direction de l'axe longitudinal médian (41) une butée (55) pour l'élément de filtration extérieur (37).

4. Unité de filtration selon l'une quelconque des revendications 1 à 3, **caractérisée en ce que**
- l'élément de filtration extérieur (37) est agencé sur une face du corps d'appui extérieur (36) opposée au corps d'appui intérieur (38), et
- l'élément de filtration intérieur (39) est agencé sur une face du corps d'appui intérieur (38) opposée au corps d'appui extérieur (36).

5. Unité de filtration selon l'une quelconque des revendications 1 à 4, **caractérisée en ce que**
les ouvertures de passage intérieures (67, 68) sont ménagées dans la partie paroi (63) et la partie fond (66).

6. Unité de filtration selon l'une quelconque des revendications 1 à 5, **caractérisée en ce que**
pour un écart radial a entre le corps d'appui intérieur (38) et le corps d'appui extérieur (36), rapporté à un écart radial A du corps d'appui extérieur (36) par rapport à l'axe longitudinal médian (41), s'applique : 0,2≤a/A≤0,8, en particulier 0,3≤a/A≤0,7 et en particulier 0,4≤a/A≤0,6.

7. Unité de filtration selon l'une quelconque des revendications 1 à 6, **caractérisée en ce que**
les ouvertures de passage extérieures (45) définissent en direction de l'axe longitudinal médian (41) une longueur extérieure de filtre F_{A} et les ouvertures de passage intérieures (67) définissent en direction de l'axe longitudinal médian (41) une longueur intérieure de filtre F_{I} dans laquelle : F_{I}/F_{A}≥0,5, en particulier F_{I}/F_{A}≥0,6 et en particulier F_{I}/F_{A}≥0,7 s'applique.

8. Ensemble de filtration pour une installation d'extrusion comprenant
- un support de filtre (30), qui comprend un axe longitudinal médian de support (31) et plusieurs ouvertures de passage de support (32, 33, 34) s'étendant en direction de l'axe longitudinal médian de support (31),
**caractérisé en ce que**
une unité de filtration (35) selon l'une quelconque des revendications 1 à 7 est fixée de manière détachable sur le support de filtre (30) dans la zone des ouvertures de passage de support (32, 33, 34) respectives.

9. Ensemble de filtration selon la revendication 8, **caractérisé en ce que**
- une première ouverture de passage de support (32) est ménagée de manière concentrique par rapport à l'axe longitudinal médian de support (31),
- au moins six deuxièmes ouvertures de passage de support (33) sont ménagées le long d'un premier cercle (K₁), qui est agencé de manière concentrique par rapport à l'axe longitudinal médian de support (31), et
- au moins douze troisièmes ouvertures de passage de support (34) sont ménagées le long d'un deuxième cercle (K₂), qui est agencé de manière concentrique par rapport à l'axe longitudinal médian de support (31) et entoure le premier cercle (K₁).

10. Dispositif de changement de tamis pour une installation d'extrusion, comprenant
- un logement (21),
- un canal de masse fondue (22) s'étendant dans le logement (21),
- un trou de guidage (23) s'étendant transversalement au canal de masse fondue (22) et à travers celui-ci dans le logement (21),
- un élément coulissant (24) agencé dans le trou de guidage (23),
- deux ensembles de filtration (28, 29) montés à distance l'un de l'autre sur l'élément coulissant (24), dans lequel chaque ensemble de filtration (28, 29) comprend un support de filtre (30) présentant un axe longitudinal médian de support (31) et plusieurs ouvertures de passage de support (32, 33, 34) s'étendant en direction de l'axe longitudinal médian de support (31),
**caractérisé en ce que**
une unité de filtration (35) selon l'une quelconque des revendications 1 à 7 est fixée de manière détachable sur le support de filtre (30) associé dans la zone des ouvertures de passage de support (32, 33, 34) respectives.
